# EUROPEAN PATENT APPLICATION

(11) **EP 3 001 327 A1**
(43) Date of publication of application: **30.03.2016**
(21) Application number: 14800311.4
(22) Date of filing: 19.05.2014
(51) Int. Cl.: G06F 17/00, G06F 17/30

(54) **METHOD AND SYSTEM OF ENHANCING ONLINE CONTENTS VALUE**

(30) Priority: 20.05.2013 KR 20130056733
(71) Applicant: Adop Inc., Seoul 135-845 (KR)
(72) Inventor: LEE, Won Sup, Seoul 135-845 (KR)
(74) Representative: Röggla, Harald
(86) International application number: PCT/KR2014/004454
(87) International publication number: WO 2014/189239

(57) **Abstract**

A method and a system for enhancing online contents value using optimization of a search engine are disclosed. The present invention indexes contents, generates indexing data, extracts main keywords from the indexing data, summarizes phrases, generates a sitemap containing the indexing data and the keywords and provides the sitemap to search engines such that the present invention has an effect of being capable of more efficiently exposing a user's content through search engines to the public. In addition, the present invention provides a content sitemap to a search engine, performs periodic searching via the corresponding search engine using the keywords extracted from the contents to check a search ranking, and analyzes the search ranking and a connection log of a website generating the corresponding content, to thereby be capable of analyzing an amount of traffic caused per content generator and advertisement effects and profitability per content generator, as well as analyzing an amount of traffic caused per content and advertisement effects and profitability per content.

## Description

### Technical Field

The present invention relates to a method and a system of enhancing an online contents value, and more particularly, to a method and a system of enhancing an online contents value using optimization of a search engine.

### Background Art

With the development of information and communication technology, generation of online-based contents has become more active. Various website operators generate various online contents such as news articles, columns, blogging, and videos to publish advertisements in the corresponding contents, and site visitors click the advertisements included in the contents and thus, advertising profits are generated.

Accordingly, in order to enhance advertisement efficiency from the viewpoint of a contents generator, the contents need to be exposed to much public, and to this end, contents distribution such as optimization of a search engine has become important.

In the case of general search sites such as Google, search engines import online contents through crawling in advance and output corresponding data from the contents collected when keywords are input. In this case, in many cases, their contents are not actually searched by the search engines, and even in the case where the contents are searched, in many cases, the contents are ousted from a search ranking and may not receive the attention of the public performing the search.

In addition, there is a limit in that the contents generators may not obtain information on whether traffic is increased in their websites by the actually searched result, how much their contents are consumed, and how much advertisements included in the website or the contents are clicked.

Therefore, the generated contents are exposed to more people and advertisements included in the contents are exposed to consumers, and thus profits are generated. As a result, a method and a system of enhancing a contents value and evaluating enhancement of the contents value are urgently needed.

### Detailed Description of the invention

An object of the present invention is to provide a method and a system of enhancing an online contents value capable of providing sitemaps of the contents to search engines so that the contents generated by users may be more searched by the search engines with reliability and measuring an amount of traffic caused through the search engines receiving the sitemaps and advertisement effects.

An embodiment of the present invention provides a method of enhancing an online contents value, the method including: a) receiving contents newly generated from a website; (b) generating contents indexing data by performing indexing for the contents; (c) extracting keywords from the indexing data; (d) generating a sitemap by using the indexing data and the keywords; (e) providing the sitemap to multiple search engines; (f) investigating a search ranking of the contents by performing the search in the multiple search engines by using the keywords based on a regular time period; and (g) analyzing advertisement effects per traffic by analyzing the search ranking and a connection log of traffic caused in the website.

In step (g), from which search engine the traffic caused in the website is input among the multiple search engines and which advertisement is selected from advertisements included in the contents may be analyzed.

The method may further include (h) analyzing an amount of traffic caused per content and advertisement effects and profitability per content for the plurality of contents, in which steps (a) to (g) are performed for the plurality of contents generated in the website.

The method may further include (h) analyzing an amount of traffic caused per content generator generating the plurality of contents and advertisement effects and profitability per content generator, in which steps (a) to (g) are performed for the plurality of contents generated in the website.

The indexing data may include at least one of a contents title, a contents generation date, a contents author, a contents content, a contents publishing URL, a contents published website name, and image and video metadata included in the contents.

Another embodiment of the present invention provides a system of enhancing an online contents value, the system including: an indexing unit configured to generate contents indexing data by performing indexing for contents received from a website; a keyword extracting unit configured to extract keywords from the indexing data; a sitemap generating unit configured to generate a sitemap by using the indexing data and the keywords to provide the generated sitemap to multiple search engines; an indexing monitoring unit configured to investigating a search ranking of the contents by performing the search in the multiple search engines by using the keywords based on a regular time period; and an analyzing unit configured to analyze advertisement effects per traffic by analyzing the search ranking and a connection log of traffic caused in the website.

The analyzing unit may analyze from which search engine the traffic caused in the website is input among the multiple search engines and which advertisement is selected from advertisements included in the contents.

The analyzing unit may further analyze an amount of traffic caused per content and advertisement effects and profitability per content for the plurality of contents generated in the website.

The analyzing unit may further analyze an amount of traffic caused per content generator generating the plurality of contents and advertisement effects and profitability per content generator for the plurality of contents generated in the website.

The indexing data may include at least one of a contents title, a contents generation date, a contents author, a contents content, a contents publishing URL, a contents published website name, and image and video metadata included in the contents.

The present invention indexes contents, generates indexing data, extracts main keywords from the indexing data, summarizes phrases, generates a sitemap containing the indexing data and the keywords and provides the sitemap to search engines such that the present invention has an effect of being capable of more efficiently exposing a user's content through search engines to the public.

In addition, the present invention provides a content sitemap to a search engine, performs periodic searching via the corresponding search engine using the keywords extracted from the contents to check a search ranking, and analyzes the search ranking and a connection log of a website generating the corresponding content, to thereby be capable of analyzing an amount of traffic caused per content generator and advertisement effects and profitability per content generator, as well as analyzing an amount of traffic caused per content and advertisement effects and profitability per content.

### Brief Description of the Drawings

FIG. 1 is a diagram illustrating a configuration of a system of enhancing an online contents value using optimization of a search engine according to an embodiment of the present invention.
FIG. 2 is a flowchart describing a method of enhancing an online contents value using optimization of a search engine according to another embodiment of the present invention.
FIG. 3 is a diagram illustrating an example of indexing data generated by an indexing unit according to the embodiment of the present invention.
FIGS. 4A and 4B are diagrams illustrating an example of a sitemap according to the embodiment of the present invention.

Hereinafter, preferable embodiments of the present invention will be described with reference to the accompanying drawings.

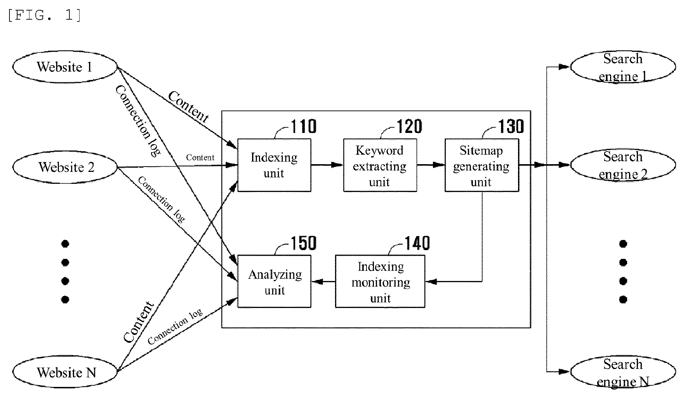

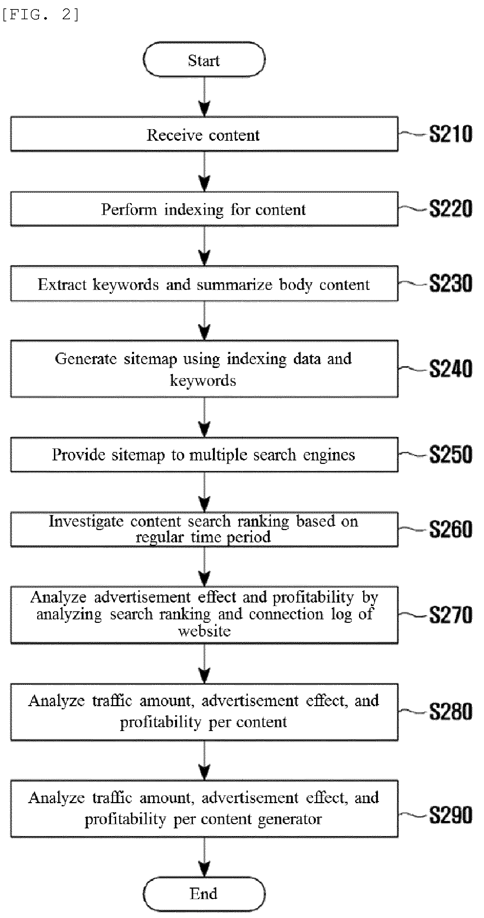

FIG. 1 is a diagram illustrating a configuration of a system of enhancing an online contents value using optimization of a search engine (hereinafter, abbreviated as "the system of enhancing the online contents value) according to an embodiment of the present invention, and FIG. 2 is a flowchart describing a method of enhancing an online contents value using optimization of a search engine (hereinafter, abbreviated as "the method of enhancing the online contents value) according to another embodiment of the present invention.

Referring to FIG. 1, the system of enhancing the online contents value according to the embodiment of the present invention includes an indexing unit 110, a keyword extracting unit 120, a sitemap generating unit 130, an indexing monitoring unit 140, and an analyzing unit 150.

Referring to FIG. 2, when describing functions of respective constituent elements, first, the indexing unit 110 receives contents from a plurality of websites (S210).

The plurality of websites is not limited as long as sites capable of providing the contents through the Internet, such as general online shops, press's websites providing news articles, Internet portal sites, personal blog sites, and personal community websites.

Further, the contents may be contents constituted by only any one of simple texts, images, and videos, and may also be contents including the text and the image, the text and the video, or the text, the image, and the video therein.

The indexing unit 110 generates contents indexing data by performing the indexing for the received contents to output the contents indexing data to the keyword extracting unit 120 (S220).

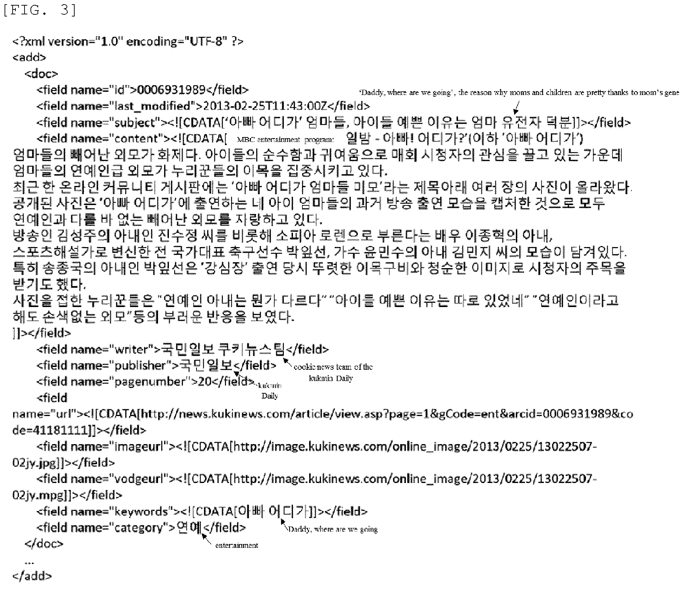

FIG. 3 is a diagram illustrating an example of the indexing data generated by the indexing unit 110 according to the embodiment of the present invention. As illustrated in FIG. 3, the indexing data of the present invention include one or more of various information such as a contents title, a contents generation date, a contents author, a contents content, a contents publishing URL, a contents published website name or organization, and image and video metadata included in the contents.

It can be seen that the indexing data illustrated in FIG. 3 may include indexing data such as a content title ('Daddy, where are we going', the reason why moms and children are pretty thanks to mom's gene), a date (Feb. 25, 2013), an author (cookie news team of the kukmin Daily), a contents content (MBC entertainment program∼), a URL (∼), an organization (the kukmin Daily), a category (entertainment), and a keyword (Daddy, where are we going).

The keyword extracting unit 120 extracts main keywords from the indexing data input from the indexing unit 110, additionally extracts commercial keywords by using the main keywords, and summarizes the body content to output the main keywords, the commercial keywords, and the body content to the sitemap generating unit 130 (S230).

The keyword extracting unit 120 differentially grants and accumulates grades according to five conditions below for respective words extracted from the indexing data according to a morpheme analysis algorithm to extract the main keywords.

A first condition differentially grants the grades according to whether the words are extracted from the title or the text. Generally, since the words included in the title have a high possibility of the main keywords, the words extracted from the title receives higher grades than the words extracted from the body content.

A second condition grants the grades to words which are adjacent to the corresponding words when the words extracted from the title are detected in the text. In this case, in the former, higher grades may be granted.

As an example of FIG. 3, in the article title ['Daddy, where are we going', the reason why moms and children are pretty thanks to mom's gene], as the main keywords, daddy, where are we going, mom, children, gene, and the like are extracted as words receiving high grades. Further, words adjacent to the main keywords extracted from the title in the article content are sequentially searched and receive the grades. In an example of FIG. 3, when describing a process of searching words adjacent to the keyword of "mom", in the text [∼recently, in an online community notice board, many sheets of photographs are uploaded below a title of 'daddy, where are we going, moms' beauty'∼], "mom" as a keyword to be searched is detected and a predetermined number of adjacent words (for example, two words) before/after "mom" is searched. In this case, a phrase of "below the title of 'daddy, where are we going, moms' beauty' is extracted, and here, "daddy" and "where are we going" included in two words before "mom", and "beauty" and "title" included in two words after "mom" are extracted and receive the grades.

A third condition differentially grants grades according to a position in the text including the words. The words differentially receive the grades according to where the words are positioned in an introduction (less than top 25% of a document size), a main subject (more than top 25% and less than top 75% of the document size), and a conclusion (more than top 75% of the document size). In the embodiment of the present invention, higher grades are granted to the keywords positioned in the conclusion, but may be controlled according to a deployment method of the contents. For example, in the case of a deductive sentence, higher grades may be granted to the words positioned in the introduction.

A fourth condition grants a weighted value according to a word frequency. Since frequently repeated words may be important words, the frequently repeated words receive high grades, and when the frequency is a predetermined level to the entire words, the corresponding contents have rather a possibility of a spam document, and thus, the contents rather receive a reverse weighted value.

A fifth condition grants grades to corresponding words in which three main keywords pre-classified as main keywords of a category to which the corresponding contents belong exist or the same words as the main keywords of a different document analyzed before the same date of the same category.

When the main keywords are extracted from the body content, the keyword extracting unit 120 additionally extracts commercial keywords by using the extracted main keywords. The commercial keywords may be determined as an upper concept of the extracted main keywords or a predetermined word which is closely associated with the main keywords. The corresponding contents may be searched in a process of searching the main keywords and the commercial keywords, and advertisements related with the corresponding commercial keywords may be included in the corresponding contents.

For example, when "hyori, Lee", "sexy", and "dance" are extracted as the main keywords, the keyword extracting unit 120 may extract "diet" as the commercial keyword from the main keywords. In this case, the corresponding contents may include diet product advertisements and may be exposed to users searching "hyori, Lee", "sexy", and "dance" and users searching "diet".

Further, when "Thailand" and "low-cost airline" are extracted as the main keywords, commercial keywords such as "travel" and "Thailand hotel" associated with the main keywords may be extracted. However, when "Thailand", "low-cost airline", and "crash" are extracted together as the main keywords, an advertisement corresponding to the commercial keyword may not be included in the corresponding contents by filtering a word having a negative image such as "crash".

Meanwhile, the sitemap generating unit 130 generates sitemaps by using the indexing data input from the indexing unit 110 and the main keywords and the commercial keywords input from the keyword extracting unit 120 (S240) and provides the generated sitemaps to the multiple search engines (S250).

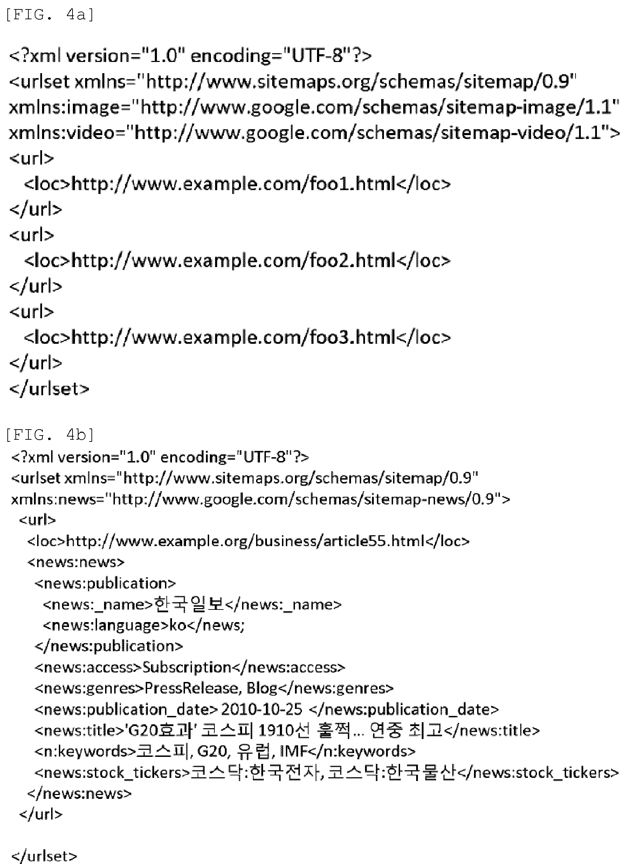

FIGS. 4A and 4B are diagrams illustrating an example of a sitemap according to the embodiment of the present invention. In FIG. 4A, sitemaps for the contents provided in a general site are illustrated, and in FIG. 4B, sitemaps for a news content are illustrated.

As illustrated in FIGS. 4A and 4B, the sitemap may include link information of original image data and video data, and information on a news issuing agent, a news issuing date, main keywords, and commercial keywords so as to be used in the search engine. The sitemap itself may be generated according to an internationally standardized format.

The indexing monitoring unit 140 receives a fact that the sitemap of the specific contents is provided to the search engines from the sitemap generating unit 130, investigates a search ranking of the contents by performing the search in the multiple search engines receiving the sitemap based on a regular time period by using the main keywords and the commercial keywords received from the sitemap generation unit 130 or the keyword extracting unit 120, and outputs the investigated result to the analyzing unit 150 (S260).

The analyzing unit 150 analyzes the search ranking and a connection log of traffic caused in the website to analyze advertisement effects per traffic and profitability therefrom (S270).

For example, the analyzing unit 150 analyzes a traffic caused degree to the search ranking of the corresponding main keywords or commercial keywords included in the sitemap to analyze traffic causing efficiency. Further, the analyzing unit 150 may investigate through which search engine each traffic is connected to the corresponding website by analyzing each traffic connection log and investigate and analyze which advertisement is selected among a plurality of advertisements included in the corresponding contents after connecting.

Particularly, in the advertisement analyzing process, the analyzing unit 150 may perform an analysis for a position (a top advertisement, a bottom advertisement, a side advertisement, and the like) of the advertisement selected by the user, a type (a banner advertisement, a popup advertisement, and the like), and the like and analyze profitability of the advertisement by using the analysis.

Further, the analyzing unit 150 may perform the analysis for the specific content and comprehensively perform the analysis for the plurality of contents generated in the corresponding website.

In particular, the analyzing unit 150 may analyze which kind of content receives an attraction of the public by analyzing an amount of traffic caused per content and advertisement effects per content for the plurality of contents generated in the corresponding website and reflect a budget required for generating the contents by checking profits per content through a profit analysis per distributed content.

Further, the analyzing unit 150 may comparatively analyze a profit present situation per content generator and analyze profits to generation cost of the content of the site by analyzing an amount of traffic caused per content generator (author) generating the plurality of contents and advertisement effects per content for the plurality of contents generated in the corresponding website (S290).

In the method of enhancing the online contents value described with reference to FIG. 2, for convenience of description, steps S280 and S290 are sequentially performed, but of course, steps S280 and S290 may be simultaneously performed or performed in reverse order.

The present invention can also be implemented as codes which can be read by a computer in a computer-readable recording medium. A computer-readable recording medium includes every type of recording devices in which data readable by a computer system processor is stored. Examples of the medium which readable by the processor include a ROM, a RAM, a CD-ROM, a magnetic tape, a floppy disk, an optical data storage device, and the like, and may also be implemented by a form of a carrier wave (for example, transmission through Internet). Further, the computer-readable recording medium is distributed in computer systems connected through a network and a computer-readable code may be stored therein and executed in a distributed manner.

For now, the present invention has been described with reference to the exemplary embodiments. It is understood to those skilled in the art that the present invention may be implemented as a modified form without departing from an essential characteristic of the present invention. Therefore, the disclosed exemplary embodiments should be considered from not a limitative viewpoint but an explanatory viewpoint. The scope of the present invention is described in not the above description but the appended claims, and it should be analyzed that all differences within a scope equivalent thereto are included in the present invention.

## Claims

1. A method of enhancing a value of online contents, the method comprising:
(a) receiving contents newly generated from a website;
(b) generating contents indexing data by performing indexing for the contents;
(c) extracting keywords from the indexing data;
(d) generating a sitemap by using the indexing data and the keywords;
(e) providing the sitemap to multiple search engines;
(f) investigating a search ranking of the contents by performing the search in the multiple search engines by using the keywords based on a regular time period; and
(g) analyzing advertisement effects per traffic by analyzing the search ranking and a connection log of traffic caused in the website.

2. The method of claim 1, wherein in step (g), from which search engine the traffic caused in the website is input among the multiple search engines and which advertisement is selected from advertisements included in the contents are analyzed.

3. The method of claim 1, further comprising:
(h) analyzing an amount of traffic caused per content and advertisement effects and profitability per content for the plurality of contents,
wherein steps (a) to (g) are performed for the plurality of contents generated in the website.

4. The method of claim 1, further comprising:
(h) analyzing an amount of traffic caused per content generator generating the plurality of contents and advertisement effects and profitability per content generator,
wherein steps (a) to (g) are performed for the plurality of contents generated in the website.

5. The method of any one of claims 1 to 4, wherein the indexing data include at least one of a contents title, a contents generation date, a contents author, a contents content, a contents publishing URL, a contents published website name, and image and video metadata included in the contents.

6. A system of enhancing a value of online contents, the system comprising:
an indexing unit configured to generate contents indexing data by performing indexing for contents received from a website;
a keyword extracting unit configured to extract keywords from the indexing data;
a sitemap generating unit configured to generate a sitemap by using the indexing data and the keywords to provide the generated sitemap to multiple search engines;
an indexing monitoring unit configured to investigating a search ranking of the contents by performing the search in the multiple search engines by using the keywords based on a regular time period; and
an analyzing unit configured to analyze advertisement effects per traffic by analyzing the search ranking and a connection log of traffic caused in the website.

7. The system of claim 6, wherein the analyzing unit analyzes from which search engine the traffic caused in the website is input among the multiple search engines and which advertisement is selected from advertisements included in the contents.

8. The system of claim 6, wherein the analyzing unit further analyzes an amount of traffic caused per content and advertisement effects and profitability per content for the plurality of contents generated in the website.

9. The system of claim 6, wherein the analyzing unit further analyzes an amount of traffic caused per content generator generating the plurality of contents and advertisement effects and profitability per content generator for the plurality of contents generated in the website.

10. The system of any one of claims 6 to 9, wherein the indexing data include at least one of a contents title, a contents generation date, a contents author, a contents content, a contents publishing URL, a contents published website name, and image and video metadata included in the contents.
